# EUROPEAN PATENT APPLICATION

(11) **EP 2 116 992 A1**
(43) Date of publication of application: **11.11.2009**
(21) Application number: 07830177.7
(22) Date of filing: 19.10.2007
(51) Int. Cl.: G09G 3/36, G02F 1/133, G09G 3/20

(54) **LIQUID CRYSTAL DRIVING DEVICE, LIQUID CRYSTAL DISPLAY DEVICE, AND LIQUID CRYSTAL DRIVING METHOD**

(30) Priority: 05.02.2007 JP 2007026054
(71) Applicant: Sharp Kabushiki Kaisha, Osaka-shi Osaka 545-8522 (JP)
(72) Inventor: The designation of the inventor has not yet been filed
(74) Representative: Müller - Hoffmann & Partner
(86) International application number: PCT/JP2007/070443
(87) International publication number: WO 2008/096481

(57) **Abstract**

A liquid crystal controller (20) includes a memory (21) for storing a plurality of gray scale conversion tables (21b) each having a different gray scale changing degree; a selecting section (22a) for selecting, from the plurality of gray scale conversion tables (21b), a gray scale conversion table to be referred to; and a conversion section (22b) for converting input gray scale data with reference to the gray scale conversion table (21b) selected. A selection condition in the selecting section (22a) is set such that: (i) as a vertical frequency of a liquid crystal display becomes higher and a liquid crystal temperature becomes lower, the gray scale conversion table of a higher gray scale changing degree is selected; and (ii) in regard to at least one of the gray scale conversion tables (21b), as the vertical frequency becomes higher, a liquid crystal temperature range in which the at least one gray scale conversion table (21b) is to be selected becomes wider. As a result, gray scale conversion that is more suitable for an overshoot drive is implemented.

## Description

### Technical Field

The present invention relates to a liquid crystal driving device which performs an overshoot drive by subjecting input gray scale data to gray scale conversion with reference to a gray scale conversion table, a liquid crystal device including the liquid crystal driving device, and a liquid crystal driving method for performing the overshoot drive by subjecting input gray scale data to gray scale conversion with reference to a gray scale conversion table.

### Background Art

Conventionally, a liquid crystal display device (LCD) has had a disadvantage in that the LCD is not suitable for displaying a moving image due to a slow response speed of liquid crystals. Developed for overcoming the disadvantage is a liquid crystal driving method which is called an overshoot drive (OS drive, over drive) (For example, see Patent Literature 1).

The overshoot drive is a driving method for improving the response speed of the liquid crystals. According to the driving method, by applying an overshoot voltage for driving the liquid crystals at transition of response of the liquid crystals, the response speed of the liquid crystals is accelerated. Specifically, the overshoot drive is a method for driving the liquid crystals by applying an overshoot voltage that is predetermined based on a direction and a degree of change from one gray scale level T1 to another gray scale level T2, rather than applying a voltage merely corresponding to the gray scale level T2, at the time when a display gray scale level of a pixel is changed from the gray scale level T1 to the gray scale level T2.

Such overshoot drive is performed generally by converting an input gray scale level with reference to a lookup table (LUT). That is, in the overshoot drive, the lookup table is prepared and stored in a memory. In this lookup table, a gray scale level T3 after conversion is associated with each combination of the gray scale level T1 before the change and the gray scale level T2 after the change. Then, the conversion of the input gray scale level is performed with reference to this lookup table.

The liquid crystal display device has had another disadvantage in that display quality tends to deteriorate due to a temperature change of the liquid crystals because the response speed of the liquid crystals is largely dependent on temperature. Developed for overcoming this disadvantage is a technique, in which a plurality of lookup tables for respective temperatures of the liquid crystals are previously configured and a lookup table for actual use is changed depending on a temperature detected by a temperature sensor (For example, see Patent Literature 2).

Meanwhile, there is a demand for a liquid crystal display device capable of displaying two or more kinds of image data each of which has a different vertical frequency (vertical display cycle) (e.g., NTSC image data having a vertical frequency of 60 Hz (525 scanning lines), and PAL and SECAM image data having a vertical frequency of 50 Hz (625 scanning lines)).

Here, the overshoot voltage which is set so as to be optimum for a certain vertical frequency, is not always optimum for another vertical frequency. This is because the voltage is applied for a shorter period as the vertical frequency becomes higher, and, as a result, the overshoot voltage must be further enhanced in order to cause the liquid crystals to operate more quickly.

Thus, in the liquid crystal display device that is capable of displaying two or more kinds of image data each of which has a different vertical frequency, a plurality of lookup tables need to be configured corresponding to respective vertical frequencies so that a significant difference in effects of the overshoot drive for different vertical frequencies is prevented from occurring and a constant level of display quality is kept at any vertical frequency.

For further preventing the display quality from deteriorating due to the temperature dependency of the response speed, more of the lookup tables need to be configured corresponding to respective liquid crystal temperatures.

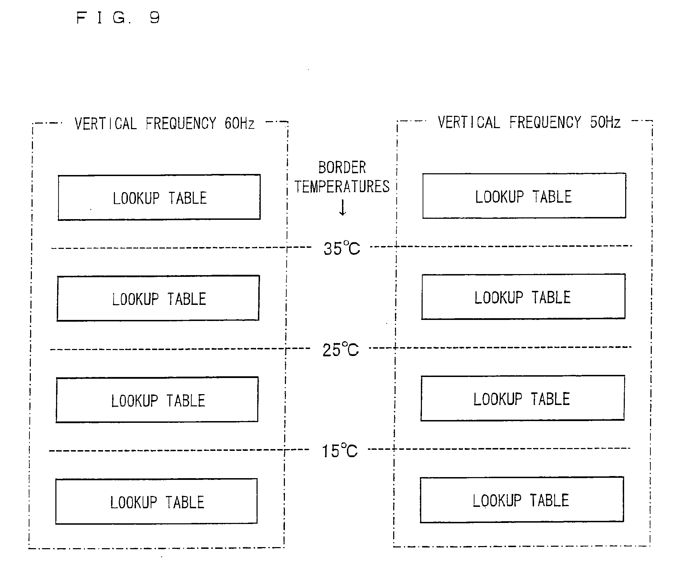

For example, Patent Literature 3 discloses a technique in which, as described above, lookup tables are independently configured corresponding to respective vertical frequencies and respective liquid crystal temperatures. In the technique disclosed in Patent Literature 3, as shown in Fig. 9, one lookup table is independently prepared for each of four temperature ranges: 15 °C or less; 15 °C to 25 °C; 25 °C to 35 °C; 35 °C or more at each of vertical frequencies of 50 Hz and 60 Hz.

When the lookup tables are configured as described above, the number of lookup tables increases. This causes a problem such that a volume of information to be stored in a memory significantly increases.

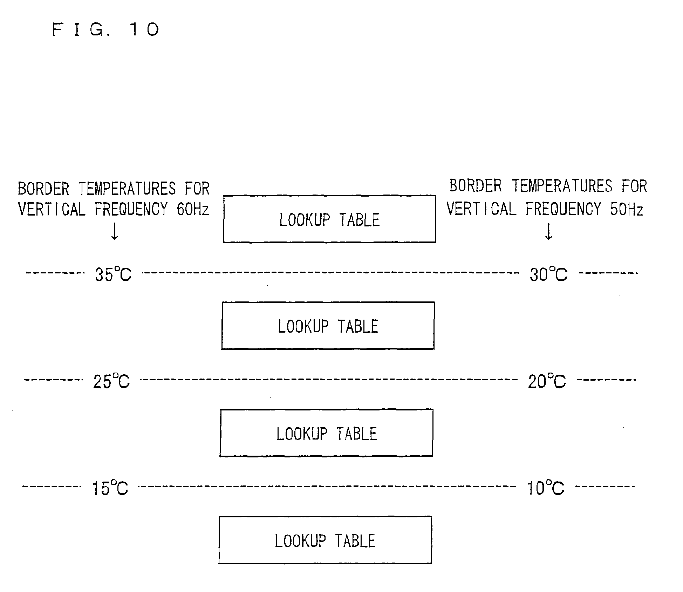

To solve this problem, Patent Literature 3 further discloses a technique in which the lookup tables are used in common for both the vertical frequencies of 50 Hz and 60 Hz. In this technique, as shown in Fig. 10, the lookup tables are independently configured, only for the vertical frequency of 60 Hz, for the four temperature ranges: 15 °C or less; 15 °C to 25 °C; 25 °C to 35 °C; and 35 °C or more. For the vertical frequency of 50 Hz, when a lookup table is selected, each of the above temperature ranges is changed to a range of: 10 °C or less; 10 °C to 20 °C; 20 °C to 30 °C; or 30 °C or more.

In this technique, for the vertical frequency of 50 Hz, for the purpose of changing the temperature range, a predetermined value (specifically, 5 °C) is added to a temperature detected by the temperature sensor.

### Citation List

Patent Literature 1
   Japanese Patent Application Publication, Tokukaihei, No. 4-365094 A (Publication Date: December 17, 1992)
Patent Literature 2
   Japanese Patent Application Publication, Tokukaihei, No. 4-318516 A (Publication Date: November 10, 1992)
Patent Literature 3
   Japanese Patent Application Publication, Tokukai, No. 2006-10714 A (Publication Date: January 12, 2006)

### Summary of Invention

However, as a result of extensive study by the inventors of the present application in gray scale conversion that is best suited for an overshoot drive at each vertical frequency and at each liquid crystal temperature, the inventors found that it may be difficult to keep a constant level of the display quality according to the above-mentioned conventional method in which a temperature range is changed by addition of a predetermined value to a temperature detected by a temperature sensor.

Especially in recent years, vertical frequencies to be applied to a liquid crystal display device are diversified. Further, due to broadened use environments of the liquid crystal display device, proper operation of the liquid crystal display device needs to be guaranteed in a wider liquid crystal temperature range. This tends to make it difficult to keep the display quality at a constant level.

The following describes, just for reference, the diversification of the vertical frequencies to be applied and the widening of the liquid crystal temperature range in which proper operation should be guaranteed.

Regarding the vertical frequencies, even in a case of a liquid crystal display device being used as a television receiver, there are a 60 Hz NTSC liquid crystal display device and a 50 Hz PAL or SECAM liquid crystal display device that are assumed in Patent Literature 3 and, in addition, recently, a 120 Hz liquid crystal display device. As a liquid crystal display device as a monitor of a personal computer, there are liquid crystal display devices whose vertical frequencies are 60 Hz, 70 Hz, 72 Hz, 75 Hz, and 85 Hz. For an on-vehicle liquid crystal display device used for an instrumental panel or the like of a vehicle, vertical frequencies are further diversified because there is no standard for the vertical frequencies.

Regarding the liquid crystal temperature range in which the proper operation should be guaranteed, for example, the on-vehicle liquid crystal display device is required to cover a very wide temperature range such as a range of -30 °C to +80 °C.

The present invention is attained in view of the above problem, and an object of the present invention is to improve the display quality by implementing gray scale conversion more suitable for the overshoot drive.

In order to solve the above problem, a liquid crystal driving device according to the present invention for performing an overshoot drive by subjecting input gray scale data to gray scale conversion with reference to a gray scale conversion table, the liquid crystal driving device includes: a storage section for storing a plurality of gray scale conversion tables each having a different gray scale changing degree in the gray scale conversion; a selecting section for selecting, from the plurality of gray scale conversion tables, the gray scale conversion table to be referred to; and a conversion section for converting the input gray scale data with reference to the gray scale conversion table selected, the selecting section employing a selection condition, the selection condition being set such that: (i) as a vertical frequency of a liquid crystal display becomes higher and a liquid crystal temperature becomes lower, the gray scale conversion table of a higher gray scale changing degree is selected; and (ii) in regard to at least one of the plurality of gray scale conversion tables, as the vertical frequency becomes higher, a liquid crystal temperature range in which the at least one of the plurality of gray scale conversion tables is to be selected becomes wider.

In this configuration, the overshoot drive is performed as follows. First, the selecting section selects, from the plurality of gray scale conversion tables stored in the storage section, th.e gray scale conversion table to be referred to. Then, the conversion section converts the input gray scale data with reference to the gray scale conversion table selected.

Each of the plurality of gray scale conversion tables has a different gray scale changing degree in the gray scale conversion. A selection condition in the selecting section is set such that, as the vertical frequency of the liquid crystal display becomes higher and the liquid crystal temperature becomes lower, the gray scale conversion table of a higher gray scale changing degree is selected. This makes it possible to perform an overshoot drive that is suitable for conditions of the vertical frequency of the liquid crystal display and the liquid crystal temperature.

Meanwhile, in a conventional overshoot drive, the liquid crystal temperature ranges in each of which the gray scale conversion table is to be selected have a constant width, regardless of the vertical frequency. In other words, the liquid crystal temperature range covered by each of the gray scale conversion tables has the same width in both cases of vertical frequencies F1 and F2, although the range covered in the case of a vertical frequency F1 is shifted from the range covered in the case of another vertical frequency F2.

However, as a result of an extensive study conducted by the inventors of the present application, it is found that the above configuration cannot always implement gray scale conversion suitable for the overshoot drive.

Based on a result of extensive study conducted by the inventors of the present invention, in the above arrangement of the present invention, in regard to at least one of the gray scale conversion tables, it is set such that, as the vertical frequency becomes higher, the liquid crystal temperature range in which the gray scale conversion table is to be selected becomes wider. That is, the liquid crystal temperature range covered by a gray scale conversion table is set so as to become wider in the case of a vertical frequency F2, as compared to the case of another vertical frequency F1 (F1<F2).

This makes it possible to implement gray scale conversion more suitable for the overshoot drive, as compared to the conventional methods. As a result, the display quality can be further improved. This effect is suitably provided especially in the case where a range of the vertical frequencies applied is wide and a range of liquid crystal temperatures at which a proper operation should be guaranteed is wide.

The liquid crystal driving device according to the present invention may be configured such that: the storage section further stores a border value table specifying border values of the liquid crystal temperatures in accordance with the vertical frequency, the border values being used when the gray scale conversion table is selected; and
the selecting section is given an input of a frequency signal indicative of a vertical frequency and a temperature signal indicative of a liquid crystal temperature so that the selecting section reads out the border values corresponding to the vertical frequency specified by the frequency signal and then selects the gray scale conversion table based on the border values and the liquid crystal temperature specified by the temperature signal.

In the case where, as in the conventional overshoot drive, each of the gray scale conversion tables covers the same liquid crystal temperature range, the liquid crystal temperature should be subjected to liner transformation in accordance with the vertical frequency, for selecting the gray scale conversion table. However, this method cannot be directly applied to the above configuration in which each of the gray scale conversion tables covers a different liquid crystal temperature range.

In view of this, in the above configuration, border values are configured in accordance with each vertical frequency. The border values are associated with each liquid crystal temperature that is used when the gray scale conversion table is selected. Then, a relation between the vertical frequencies and the border values is stored in the storage section as a border value table. Then, the selecting section reads out the border values corresponding to the vertical frequency indicated by the frequency signal, and selects the gray scale conversion table based on the border values and the liquid crystal temperature indicated by the temperature signal.

This makes it possible to set, in accordance with the vertical frequency and without restraint, the border values of the liquid crystal temperatures which are used when the gray scale conversion table is selected. Accordingly, it becomes possible to set the border values so that, as the vertical frequency becomes higher, a liquid crystal temperature range in which the gray scale conversion table is selected becomes wider.

In the liquid crystal driving device according to the present invention, the plurality of gray scale conversion tables are configured to associate output gray scale data to be outputted to a liquid crystal display panel in a current vertical display period with a combination of the input gray scale data of the current vertical display period and the input gray scale data of a previous vertical display period one cycle before the current vertical display period. Alternatively, the plurality of gray scale conversion tables are configured to associate predicted value data of gray scale levels each being predicted to have been reached in a previous display period with a combination of the input gray scale data of a current vertical display period and the input gray scale data of the previous vertical display period one cycle before the current vertical display period. As a further alternative, the plurality of gray scale conversion tables are configured to associate output gray scale data to be outputted to a liquid crystal display panel in a current vertical display period with a combination of the input gray scale data of the current vertical display period and predicted value data of gray scale levels each being predicted to have been reached in a previous display period one cycle before the current vertical display period.

A liquid crystal displaying device according to the present invention includes: a liquid crystal driving device selected from the above-described liquid crystal driving devices; a liquid crystal display panel being driven by the liquid crystal driving device; and a temperature detecting section for detecting a liquid crystal temperature of the liquid crystal display panel.

In this configuration, the above-described liquid crystal driving device makes it possible to implement gray scale conversion more suitable for the overshoot drive, and, as a result, the display quality can be further improved.

A liquid crystal driving method according to the present invention for performing an overshoot drive by subjecting input gray scale data to gray scale conversion with reference to a gray scale conversion table, the method comprising the steps of: selecting a gray scale conversion table to be referred to, from a plurality of gray scale conversion tables each having a different gray scale changing degree in the gray scale conversion; and converting the input gray scale data with reference to the gray scale conversion table selected, the step of selecting employing a selection condition, the selection condition being set such that: (i) as a vertical frequency of a liquid crystal display becomes higher and the liquid crystal temperature becomes lower, the gray scale conversion table of a higher gray scale changing degree is selected; and (ii) in regard to at least one of the plurality of gray scale conversion tables, as the vertical frequency becomes higher, a liquid crystal temperature range in which the at least one gray scale conversion table is to be selected becomes wider.

This makes it possible to implement gray scale conversion more suitable for the overshoot drive, as compared to the conventional methods. As a result, the display quality can be improved. Such an effect can be suitably provided especially in a case where the range of the vertical frequencies to be applied is wide or in a case where the liquid crystal temperature range in which the proper operation should be guaranteed is wide.

For a fuller understanding of the nature and advantages of the invention, reference should be made to the ensuing detailed description taken in conjunction with the accompanying drawings.

### Brief Description of Drawings

Fig. 1

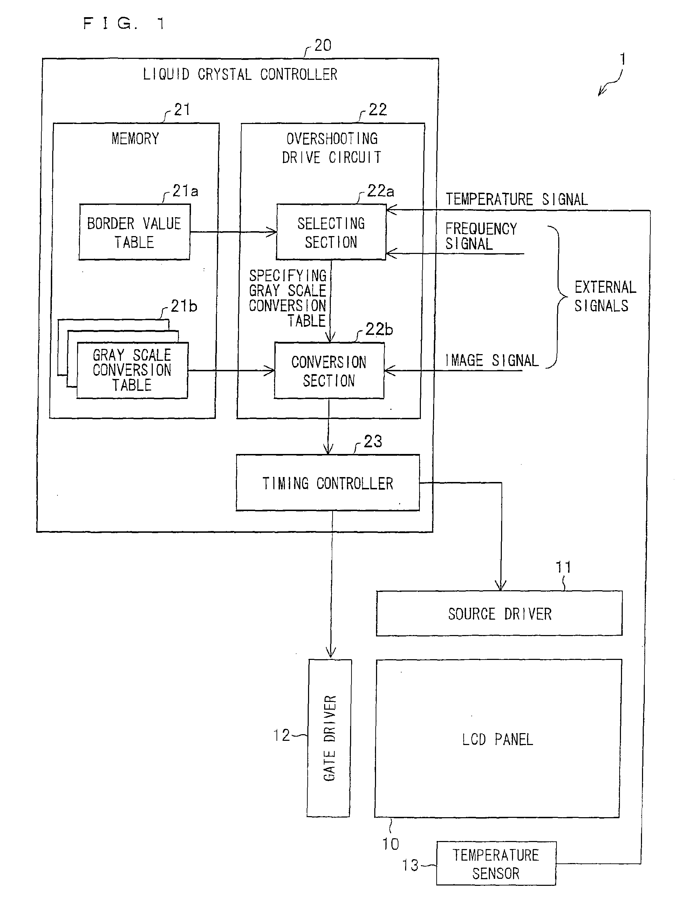

   Fig. 1 is a block diagram illustrating a configuration of a liquid crystal display device according to one embodiment of the present invention.
Fig. 2

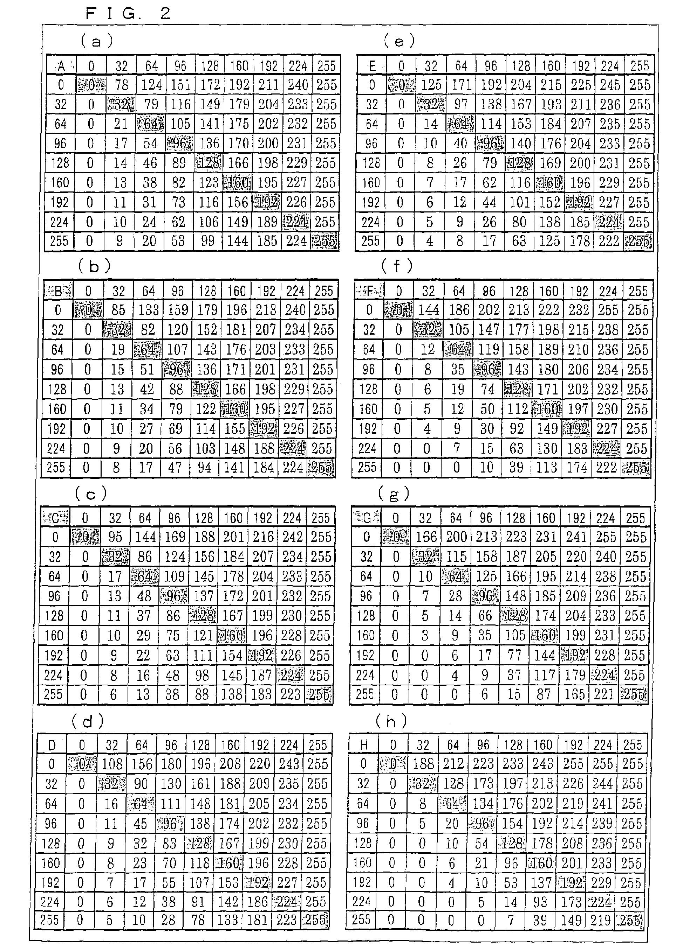

   Fig. 2 including (a) to (h) is a diagram illustrating examples of gray scale conversion tables to be stored in a memory of a liquid crystal controller of the liquid crystal display device of Fig. 1.
Fig. 3

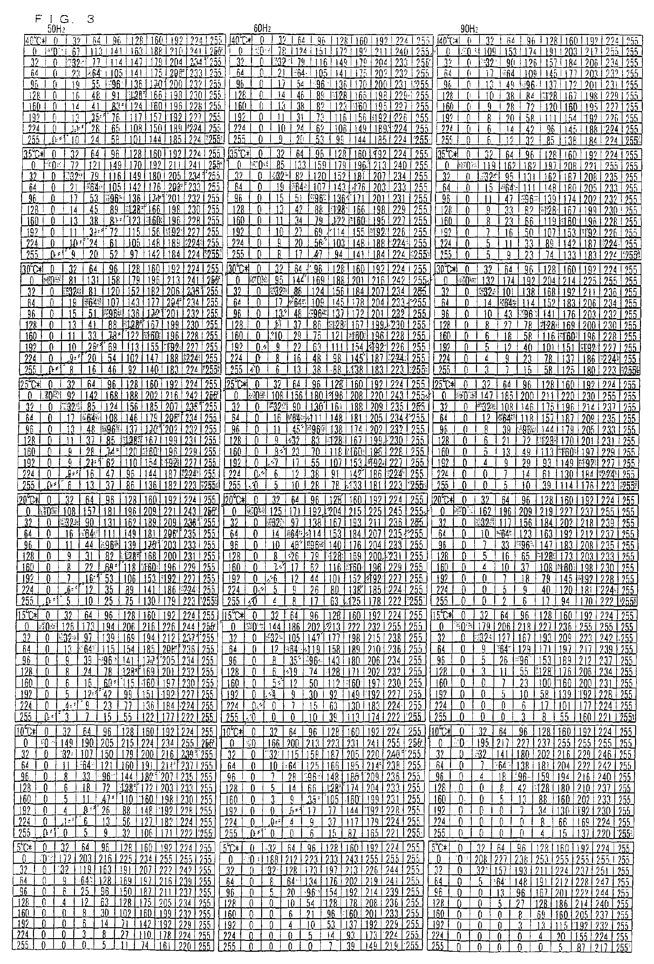

   Fig. 3 is a diagram showing gray scale conversion tables for implementing gray scale conversion that is best suited for each of different liquid crystal temperatures (5 °C to 40 °C) and for each of different vertical frequencies (50 Hz, 60 Hz, 90 Hz).
Fig. 4

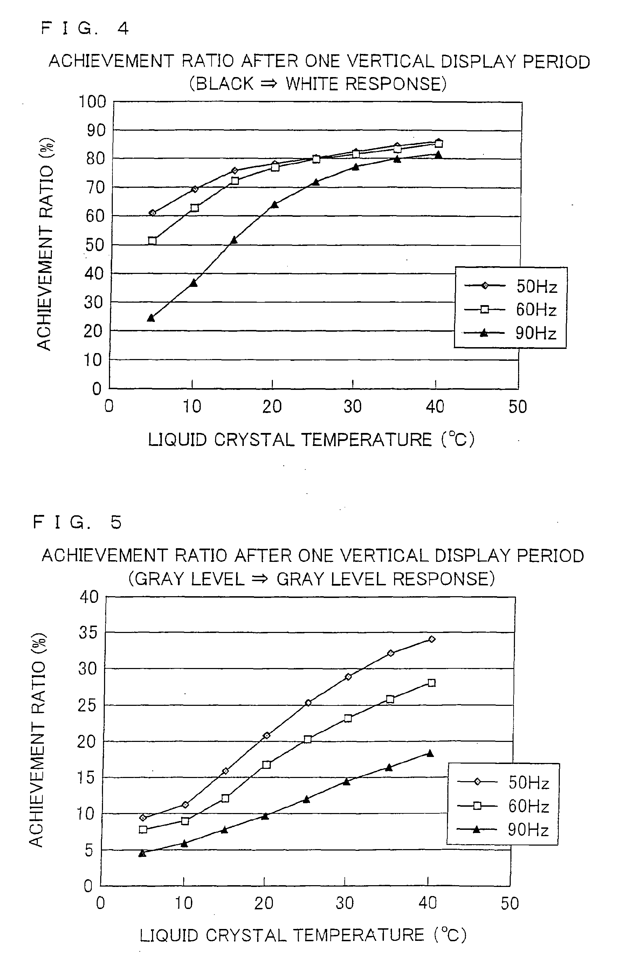

   Fig. 4 is a graph showing variation of achievement ratios after one vertical display period against liquid crystal temperatures, regarding gray scale conversion from a black display to a while display.
Fig. 5
   Fig. 5 is a graph showing variation of achievement ratios after one vertical display period against the liquid crystal temperatures, regarding gray scale conversion from one gray level display to another gray level display.
Fig. 6

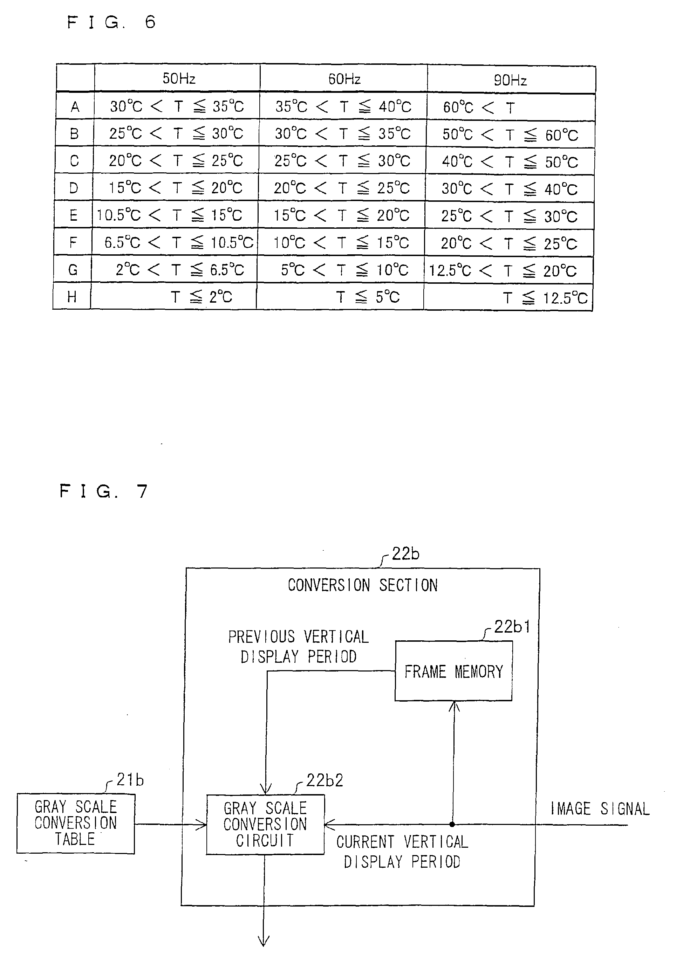

   Fig. 6 is a diagram illustrating an example of a border value table to be stored in the memory of the liquid crystal controller in the liquid crystal display device of Fig. 1.
Fig. 7
   Fig. 7 is a block diagram showing a configuration of a conversion section of the liquid crystal controller in the liquid crystal display device of Fig. 1.
Fig. 8

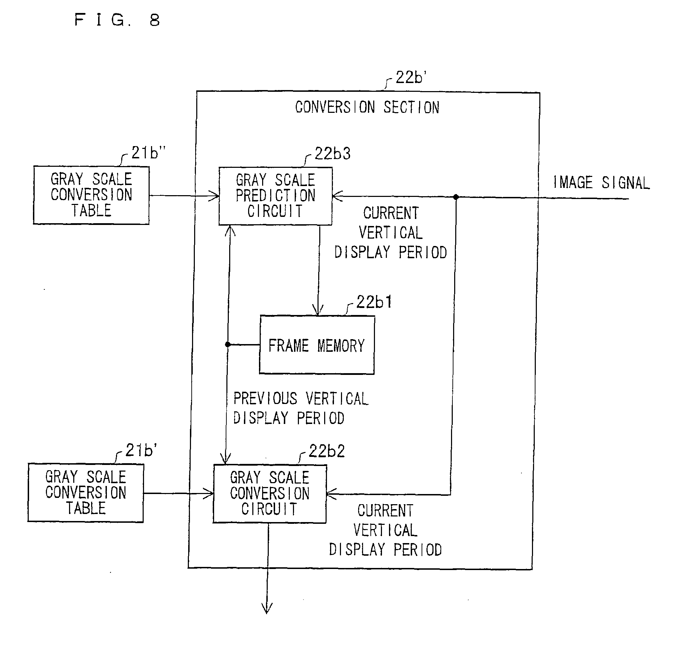

   Fig. 8 is a block diagram showing another configuration of the conversion section of the liquid crystal controller in the liquid crystal display device of Fig. 1.
Fig. 9
   Fig. 9 is a diagram showing an example of lookup tables which are configured in a conventional technique.
Fig. 10
   Fig. 10 is a view showing an example of lookup tables which are configured in another conventional technique.

### Reference Sings List

- 1: Liquid Crystal Display Device
- 10: Liquid Crystal Display Panel
- 11: Source Driver
- 12: Gate Driver
- 13: Temperature Sensor (Temperature Detecting Section)
- 20: Liquid Crystal Controller (Liquid Crystal Driving Device)
- 21: Memory (Storage Section)
- 21a: Border Value Table
- 21b: Gray Scale Conversion Table
- 21b': Gray Scale Conversion Table
- 21b": Gray Scale Conversion Table
- 22: Overshoot Drive Circuit
- 22a: Selecting Section
- 22b: Conversion Section
- 22b': Conversion Section
- 22b1: Frame Memory
- 22b2: Gray Scale Conversion Circuit
- 22b3: Gray Scale Prediction Circuit
- 23: Timing Controller

### Description of Embodiments

One embodiment of the present invention is described below with reference to Figs. 1 to 8.

An overall configuration of a liquid crystal display device 1 of the present embodiment is described with reference to Fig. 1. In the liquid crystal display device 1, for improving an optical response speed of a liquid crystal display panel, an overshoot drive is performed by subjecting input gray scale data to gray scale conversion with reference to a gray scale conversion table. Further, in the liquid crystal display device 1, the above gray scale conversion is adjusted in accordance with a vertical frequency of a display image and a temperature of liquid crystals (liquid crystal temperature) of the liquid crystal display panel so that more suitable overshoot drive is performed for improving a display quality.

The liquid crystal display device 1 includes, as shown in Fig. 1, a liquid crystal display panel 10, a source driver 11, a gate driver 12, a temperature sensor 13, and a liquid crystal controller 20.

Among these, the liquid crystal display panel 10, the source driver 11, and the gate driver 12 are well-known configuration members. Therefore, explanations of these members are omitted here. Note that, as conventionally known, the optical response speed of the liquid crystal panel 10 tends to become slower as the liquid crystal temperature becomes lower.

The temperature sensor 13 is positioned in contact with or in the vicinity of the liquid crystal display panel 10. The temperature sensor 13 detects the liquid crystal temperature of the liquid crystal display panel 10 and then outputs a temperature signal indicating the detected liquid crystal temperature.

The liquid crystal controller 20 is equivalent to a liquid crystal driving device of the present invention. The liquid crystal controller 20 supplies various control signals to the source driver 11 and to the gate driver 12, based on an image signal or the like inputted from an external device, so as to cause the liquid crystal display panel 10 to display a desired image.

The liquid crystal controller 20 includes a memory 21, an overshoot drive circuit 22, and a timing controller 23.

The memory 21 is equivalent to a storage section of the present invention, and made up of, for example, an EEPROM (electrically erasable programmable read-only memory). The memory 21 stores a border value table 21a and a gray scale conversion table 21b, each of which is a kind of lookup tables. The following explains in detail the border value table 21a and the gray scale conversion table 21 b.

First, the gray scale conversion table 21b is explained here. The memory 21 stores, as shown in (a) to (h) of Fig. 2, a plurality of gray scale conversion tables 21b (hereinafter, referred to as, for example, a "gray scale conversion table A" in a case where each of the gray scale conversion tables 21b is to be identified).

In gray scale conversion tables A to H shown in (a) to (h) of Fig. 2, a first row (in a horizontal direction) is provided with gray scale data of a current vertical display period (current frame), while a first column (in a vertical direction) is provided with gray scale data of a previous vertical display period (previous frame) which is a vertical display period (frame) one cycle before the current vertical display period. In each of a column specified by the gray scale data of the previous display period and a row specified by the gray scale data of the current display period, data predetermined as gray scale data after gray scale conversion is stored.

For example, in the gray scale conversion table A, if the gray scale data of the current vertical display period is 64 and the gray scale data of the previous vertical display period is 32, the gray scale data after the gray scale conversion becomes 79. That is, in a case where a display gray scale level is changed from a gray level 32 to a gray level 64, a gray level 79 is written into the liquid crystal display panel 10 so as to emphasize the change.

The gray scale conversion tables 21 b may be prepared for every possible combination of values of the current and previous vertical display periods in the gray scale data. Alternatively, as shown in the gray scale tables A to H, the gray scale conversion tables 21b may be prepared only for combinations of representative gray scale levels discretely selected from all the gray scale levels in the current and previous vertical display periods. This makes it possible to reduce a data volume of the gray scale conversion tables 21b. In this case, a gray scale levels between the representative gray scale levels can be converted by use of a calculation such as a linear interpolation. Because the calculation is conventionally known, contents of the calculation and a configuration for performing the calculation are not explained here.

The gray scale conversion tables A to H are configured so as to implement gray scale conversion best suited for each of different liquid crystal temperatures. The gray scale conversion tables A to H provide different gray scale changing degrees in gray scale conversion using the gray scale conversion tables A to H. Here, the description "different gray scale changing degrees" indicates that at least a part of the gray scale data is different between gray scale conversion tables in a case where the gray scale conversion tables are compared in terms of each set of gray scale data in the same column of the same row. Generally, in the part where the gray scale data is different, gray scale data stored in one gray scale conversion table always has a larger (smaller) value than gray scale data stored in the other gray scale conversion table.

Therefore, by using the gray scale conversion tables A to H in turn, it is possible to implement gray scale conversion that is best suited for each of the different liquid crystal temperatures.

Here, actual measurement was carried out for obtaining gray scale conversion tables for implementing gray scale conversion that was best suited for each of the different liquid crystal temperatures (5 °C to 40 °C) and each of the different vertical frequencies (50 Hz, 60 Hz, and 90 Hz). Thus obtained gray scale conversion tables are shown in Fig. 3.

Fig. 3 shows, in a left column, the gray scale conversion tables optimum for the liquid crystal temperatures (in a range of 5 °C to 40 °C, every 5 °C) at a vertical frequency of 50 Hz. Similarly, the gray scale conversion tables at a vertical frequency of 60 Hz are provided in a middle column. Further, the gray scale conversion tables at a vertical frequency of 90 Hz are provided in a right column.

Further, in Fig. 3, a double line (=) connects gray scale conversion tables that are of different vertical frequencies and have relatively similar gray scale changing degrees. The followings are sets of such gray scale conversion tables having relatively similar gray scale changing degrees:
the gray scale conversion table for a liquid crystal temperature of 35 °C at a vertical frequency of 50 Hz and the gray scale conversion table for a liquid crystal temperature of 40 °C at a vertical frequency of 60 Hz;
the gray scale conversion table for a liquid crystal temperature of 30 °C at the vertical frequency of 50 Hz and the gray scale conversion table for a liquid crystal temperature of 35 °C at the vertical frequency of 60 Hz;
the gray scale conversion table for a liquid crystal temperature of 25 °C at the vertical frequency of 50 Hz and the gray scale conversion table for a liquid crystal temperature of 30 °C at the vertical frequency of 60 Hz;
the gray scale conversion table for a liquid crystal temperature of 20 °C at the vertical frequency of 50 Hz, the gray scale conversion table for a liquid crystal temperature of 25 °C at the vertical frequency of 60 Hz, and the gray scale conversion table for a liquid crystal temperature of 40 °C at a vertical frequency of 90 Hz;
the gray scale conversion table for a liquid crystal temperature of 15 °C at the vertical frequency of 50 Hz, the gray scale conversion table for a liquid crystal temperature of 20 °C at the vertical frequency of 60 Hz, and the gray scale conversion table for a liquid crystal temperature of 30 °C at the vertical frequency of 90 Hz;
the gray scale conversion table for a liquid crystal temperature of 10 °C at the vertical frequency of 50 Hz, the gray scale conversion table for a liquid crystal temperature of 15 °C at the vertical frequency of 60 Hz, and the gray scale conversion table for a liquid crystal temperature of 25 °C at the vertical frequency of 90 Hz;
the gray scale conversion table for a liquid crystal temperature of 5 °C at the vertical frequency of 50 Hz, the gray scale conversion table for a liquid crystal temperature of 10 °C at the vertical frequency of 60 Hz, and the gray scale conversion table for a liquid crystal temperature of 20 °C at the vertical frequency of 90 Hz; and
the gray scale conversion table for a liquid crystal temperature of 5 °C at the vertical frequency of 60 Hz, and the gray scale conversion table for a liquid crystal temperature of 10 °C at the vertical frequency of 90 Hz.

The gray scale conversion tables having relatively similar gray scale changing degrees can substitute for each other. For example, the gray scale conversion table for the liquid crystal temperature of 25 °C at the vertical frequency of 60 Hz can substitute for the gray scale conversion table for the liquid crystal temperature of 20 °C at the vertical frequency of 50 Hz, and also for the gray scale conversion table for the liquid crystal temperature of 40 °C at the vertical frequency of 90 Hz.

In consideration of this, the liquid crystal controller 20 of the present invention is configured such that the gray scale conversion tables for the vertical frequency of 60 Hz are used also as the gray scale conversion tables for the vertical frequencies of 50 Hz and 90 Hz. Accordingly, the memory 21 is configured to store only the gray scale conversion tables for the vertical frequency of 60 Hz, as the gray scale conversion tables 21b (See (a) to (h) of Fig. 2).

A more detailed study revealed that the gray scale conversion table for the liquid crystal temperature of 15 °C at the vertical frequency of 60 Hz is substantially equivalent to a gray scale conversion table for a liquid crystal temperature of 11 °C at the vertical frequency of 50 Hz, and the gray scale conversion table for the liquid crystal temperature of 10 °C at the vertical frequency of 60 Hz is substantially equivalent to a gray scale conversion table for a liquid crystal temperature of 6.5 °C at the vertical frequency of 50 Hz. Similarly, the gray scale conversion tables for the liquid crystal temperature of 5 °C at the vertical frequency of 60 Hz is substantially equivalent to a gray scale conversion table for a liquid crystal temperature of 12.5 °C at the vertical frequency of 90 Hz.

The above actual measurement reveals that a condition in selecting a gray scale conversion table has to be set as follows. First, it is necessary to select a gray scale conversion table of a higher gray scale changing degree, as the vertical frequency of the liquid crystal display becomes higher and the liquid crystal temperature becomes lower. This is clear from optical response characteristics of the liquid crystals.

Further, when a comparison is made, in terms of liquid crystal temperature differences, between the gray scale conversion tables that are of different vertical frequencies and have relatively similar gray scale changing degrees, it is found that the liquid crystal temperature differences are not always the same.

For example, the gray scale conversion table for the liquid crystal temperature of 25 °C at the vertical frequency of 60 Hz is substantially equivalent to the gray scale conversion table for the liquid crystal temperature of 40 °C at the vertical frequency of 90 Hz, and the temperature difference in this case is 15 °C. However, the gray scale conversion tables for the liquid crystal temperatures of (i) 20 °C, (ii) 15 °C, and (iii) 10 °C at the vertical frequency of 60 Hz are substantially equivalent respectively to the gray scale conversion tables for the liquid crystal temperatures of (i) 30 °C, (ii) 25 °C, and (iii) 20 °C at the vertical frequency of 90 Hz, and the temperature differences in these cases (i), (ii), and (iii) are all 10 °C. The gray scale conversion table for the liquid crystal temperature of 5 °C at the vertical frequency of 60 Hz is substantially equivalent to the gray scale conversion table for the liquid crystal temperature of 10 °C (more exactly 12.5 °C) at the vertical frequency of 90 Hz, and the temperature difference in this case is 5 °C (more exactly 7.5 °C).

As far as Fig. 3 shows, the temperature differences between the gray scale conversion tables for the vertical frequencies of 60 Hz and 50 Hz are always 5 °C. However, as to more exact values, the gray scale conversion table for the liquid crystal temperature of 15 °C at the vertical frequency of 60 Hz is substantially equivalent to the gray scale conversion table for the liquid crystal temperature of 11 °C at the vertical frequency of 50 Hz, and the temperature difference in this case is 4 °C. Further, the gray scale conversion table for the liquid crystal temperature of 10 °C at the vertical frequency of 60 Hz is substantially equivalent to the gray scale conversion table for the liquid crystal temperature of 6.5 °C at the vertical frequency of 50 Hz, and the temperature difference in this case is 3.5 °C.

As described above, regarding the gray scale conversion tables having relatively similar gray scale changing degrees, the temperature differences between the gray scale conversion tables for the different frequencies are not always the same. The reason for this is speculated as follows.

The reason for this is as follows: (a) a luminance achieved with respect to a target luminance level after one vertical display period (important in the overshoot drive and, hereinafter, referred to as an "achievement ratio after one vertical display period"), is different for each vertical frequency, and (b) there is nonlinearity in temperature dependence. Figs. 4 and 5 are graphs each showing variation in achievement ratio after one vertical display period against the liquid crystal temperatures.

In a case where the achievement ratios after one vertical display period are substantially equal, the gray scale changing degrees in the overshoot drive will be substantially the same. That is, when the vertical frequency is changed, the liquid crystal temperature should be converted to another liquid crystal temperature selected from the graph. The another liquid crystal temperature has, at a frequency after the change, an achievement ratio after one vertical display period that is substantially equal to an achievement ratio after one vertical display period at the vertical frequency before the change. For example, in Fig. 5, under conditions of (i) the liquid crystal temperature of 10 °C at the vertical frequency of 50 Hz, (ii) the liquid crystal temperature of 15 °C at the vertical frequency of 60 Hz, and (iii) the liquid crystal temperature of 25 °C at the vertical frequency of 90 Hz, all achievement ratios are approximately 12%. That is, the achievement ratios under these conditions are regarded as substantially equal. It is assumed here to use the gray scale conversion tables configured for the respective liquid crystal temperatures of 10 °C, 15 °C, 20 °C, and 25 °C at the vertical frequency of 60 Hz. On an assumption that the vertical frequency is changed to 50 Hz in a case where a detected liquid crystal temperature is 15 °C, the detected temperature of 15 °C should be converted to 10 °C, and the gray scale conversion table for 10 °C should be used. On an assumption that the vertical frequency is changed to 90 Hz in a case where the detected liquid crystal temperature is 15 °C, the temperature should be converted to 25 °C and the gray scale conversion table for 25 °C should be used.

However, the achievement ratio after one vertical display period has a nonlinear characteristic with respect to the liquid crystal temperature and the nonlinear characteristic varies depending on the vertical frequency. This varies the gray scale changing degrees in the overshoot drive, depending on the liquid crystal temperature and the vertical frequency. Accordingly, a scale of conversion at the conversion as described above will vary. Schematically, the larger the difference between the vertical frequencies becomes and the wider a range of the liquid crystal temperatures becomes, the larger the difference between the achievement ratios after one vertical display period becomes. Therefore, a shift amount of the gray scale changing degree in the overshoot drive tends to become larger due to the change of the vertical frequencies.

More detailed study reveals that, as shown in Fig. 5, a rate of change of the achievement ratio with respect to a change in the liquid crystal temperature (a slope of the graph of Fig. 5) tends to become smaller as the vertical frequency becomes higher. This fact particularly needs to be taken into account when the gray scale conversion table is selected.

A trend of the graph of Fig. 5, i.e., a trend such that the rate of change of the achievement ratio with respect to the change in the liquid crystal temperature becomes smaller as the vertical frequency becomes higher, does not apply to a graph of Fig. 4 that shows a change from a black display to a white display. However, in the overshoot drive, it is preferable to put importance on a change from a gray level to another gray level (Fig. 5) rather than on the change from the black display to the while display (Fig. 4). This is because, in the case of the change from the black display to the white display, the gray scale level before the gray scale conversion from the start indicates a maximum value and does not change before and after the gray scale conversion (For example, in a case where the gray scale level 0 of the previous vertical display period is changed to the gray scale level 255 of the current vertical display period in (a) of Fig. 2, the gray scale level of the current vertical display period after the gray scale conversion is also 255. That is, the gray scale level of the current vertical display period does not change even after the gray scale conversion.), and therefore the overshoot drive does not work in this case.

Here, it is assumed that the trend of the graph of Fig. 5, i.e., the trend in which the rate of the change of the achievement ratio with respect to the change in the liquid crystal temperature becomes smaller as the vertical frequency becomes higher, is applied to a condition for selecting the gray scale conversion table to be used. On this assumption, in regard to at least one of the gray scale conversion tables, the condition needs to be set such that, as the vertical frequency becomes higher, the liquid crystal temperature range in which the at least one gray scale conversion table is to be selected becomes wider.

A device for carrying out the selection based on such a selection condition may be configured to convert the detected liquid crystal temperature in accordance with the vertical frequency, as described above. However, it is more preferable that the device be configured such that (i) for each of the plurality of gray scale conversion tables, border values of the liquid crystal temperatures at each of which a gray scale conversion table is to be selected are set in advance in accordance with the vertical frequency and (ii) the gray scale conversion table to be used is selected based on the border values, the actual liquid crystal temperature, and the actual vertical frequency. This is because the above-described selection condition cannot be represented by a simple conversion formula in which a predetermined value is simply added to or subtracted from the detected liquid crystal temperature. This makes a device configuration for carrying out conversion of a liquid crystal temperature complex and expensive, in a case where the conversion of the liquid crystal temperature is carried out.

In order to solve this problem, in the liquid crystal controller 20 of the present invention, the border values of the liquid crystal temperatures that are used when the gray scale conversion table 21b is to be selected (values specifying, for each gray scale conversion table, a range of the liquid crystal temperatures as a condition for selecting the gray scale conversion table) are predetermined in advance in accordance with the vertical frequency. The memory 21 stores a border value table 21 a indicating a relation between the vertical frequencies and the border values. Fig. 6 shows the border value table 21a.

The border value table 21a specifies which one of the gray scale conversion tables A to H should be selected in accordance with the vertical frequency and the liquid crystal temperature. For example, in the case where the liquid crystal temperature is in a range higher than 25 °C to 30 °C or lower at the vertical frequency of 60 Hz, the gray scale conversion table C should be selected.

The overshoot drive circuit 22 performs the overshoot drive, with reference to the above-described border value table 21a and the gray scale conversion table 21b. The overshoot drive circuit 22 can be sectionalized into two functional blocks, that is, the selecting section 22a and the conversion section 22b.

The selecting section 22a is for selecting, from the gray scale conversion tables A to H stored in the memory 21, the gray scale conversion table 21b to be referred to. For this purpose, a frequency signal indicating the vertical frequency and a temperature signal indicating the liquid crystal temperature are inputted into the selecting section 22a. The frequency signal is inputted, together with an image signal, from outside of the liquid crystal display device 1. The temperature signal is transmitted from the temperature sensor 13 to the selecting section 22a.

The selecting section 22a reads out the border values of the liquid crystal temperatures with reference to the border value table 21a, in accordance with the vertical frequency indicated by the frequency signal. Subsequently, the selecting section 22a selects one gray scale conversion table 21b from the gray scale conversion tables A to H, based on the border values and the liquid crystal temperature indicated by the temperature signal. Then, the selecting section 22a specifies the gray scale conversion table 21 b for the conversion section 22b so that the conversion section 22b performs the gray scale conversion with reference to the specified gray scale conversion table 21b.

As described above, in the liquid crystal controller 20, the border values of the liquid crystal temperatures which are used when the gray scale conversion table 21 b is selected are set in advance in accordance with the vertical frequencies. The memory 21 stores a relation between the border values and each gray scale conversion table as the border value table 21a. Subsequently, the selecting section 22a reads out the border values corresponding to the vertical frequency that is indicated by the frequency signal, and then selects the gray scale conversion table 21b based on the border values and the liquid crystal temperature indicated by the temperature signal.

This makes it possible to set, in accordance with the vertical frequency and without restraint, the border values of the liquid crystal temperatures which are used when the gray scale conversion table 21b is selected. Accordingly, it becomes possible to set the border values so that, as the vertical frequency becomes higher, a liquid crystal temperature range in which the gray scale conversion table 21b is selected becomes wider.

The conversion section 22b performs the overshoot drive with reference to the gray scale conversion table 21 b specified by the selecting section 22a. For this purpose, the image signal as an external signal is inputted into the selecting section 22a. The image signal is for conveying, in order of time, the input gray scale data for each pixel in each vertical display period.

As shown in Fig. 7, in the conversion section 22b, the gray scale conversion circuit 22b2 is given (i) an input of an image signal indicating the input gray scale data of the current vertical display period and (ii) an input of another image signal that indicates the input gray scale conversion data of a previous vertical display period and that is obtained by delaying the image signal for one vertical display period by use of a frame memory 22b1. Then, with use of the inputted signals, the conversion section 22b performs the gray scale conversion with reference to the specified gray scale conversion table 21 b.

The timing controller 23 drives the liquid crystal display panel 10 by outputting, to the source driver 11 and the gate driver 12, various signals required for driving the liquid crystal display panel 10. The various signals include output gray scale data after the gray scale conversion. This output gray scale data is outputted from the conversion section 22b. Because the timing controller 23 is a well-known configuration member, the timing controller 23 is not explained here.

Instead of the conversion section 22b shown in Fig. 7, a conversion section 22b' shown in Fig. 8 can also be used as the conversion section. The conversion section 22b' carries out the gray scale conversion as follows. First, a gray scale prediction circuit 22b3 is provided with (i) an input of an image signal indicating the input gray scale data of the current vertical display period and (ii) another image signal that indicates the input gray scale data of the previous vertical display period and that is obtained by delaying the image signal for one vertical display period by use of a frame memory 22b1. Next, with use of the inputted signals, the gray scale prediction circuit 22b3 predicts a gray scale of the liquid crystal that has been reached in the previous vertical display period with reference to a specified gray scale conversion table 21b". Then, the frame memory 22b1 delays a result of the prediction for one vertical display period so as to obtain input gray scale data of the previous vertical display period. Then, (i) the input gray scale data of the previous vertical display period and (ii) the image signal indicating the input gray scale data of the current vertical display period are inputted into the gray scale conversion circuit 22b2. With use of the inputted data and signal, the conversion section 22b' performs the gray scale conversion with reference to a specified gray scale conversion table 21 b'.

In this case, the gray scale conversion table 21 b" that is referred to by the gray scale prediction circuit 22b3 includes, as output values, predicted value data of gray scale levels each being predicted to have been reached in the previous vertical display period. In this point, specific values of the gray scale conversion table 21b" is different from specific values of the gray scale conversion table 21b. However, the gray scale conversion table 21 b" is the same as the gray scale conversion table 21b in terms of the selection condition. That is, the selection condition is set such that, as the vertical frequency of the liquid crystal display becomes higher and the liquid crystal temperature becomes lower, the gray scale conversion table of a higher gray scale changing degree is selected. In addition, in regard to at least one of the plurality of gray scale conversion tables, the condition is set such that, as the vertical frequency becomes higher, the liquid crystal temperature range in which the at least one gray scale conversion table is to be selected becomes wider.

The gray scale conversion table 21 b' that is referred to by the gray scale conversion circuit 22b2 includes, in a first row (vertical direction), predicted value data of gray scale levels each being predicted to have been reached in the previous vertical display period, instead of the gray scale data of the previous vertical display period. In this point, specific values of the gray scale conversion table 21b' is different from the specific values of the gray scale conversion table 21b. However, the gray scale conversion table 21b' is the same as the gray scale conversion table 21 b in terms of the selection condition. That is, the selection condition is set such that, as the vertical frequency of the liquid crystal display becomes higher and the liquid crystal temperature becomes lower, the gray scale conversion table of a higher gray scale changing degree is selected. In addition, in regard to at least one of the plurality of the gray scale conversion tables, the selection condition is set such that, as the vertical frequency becomes higher, the liquid crystal temperature range in which the at least one gray scale conversion table is to be selected becomes wider.

In other words, the present invention is also applicable to the gray scale conversion tables 21b' and 21b", in the same manner as the gray scale conversion table 21b.

It is desirable that the overshoot drive circuit 22 is made up of a CPU (central processing unit) and an external memory is provided, independently of the CPU, as a memory 21 for storing the border value table 21a. This makes a storage region for the border value table 21a in the CPU dispensable. Accordingly, it becomes possible to employ a simple and inexpensive CPU. The memory for storing the gray scale conversion tables 21 b, 21b', and 21 b" can be used in common for the external memory for storing the border value table 21a.

In the present embodiment, the gray scale conversion tables A to H are configured for respective predetermined liquid crystal temperature ranges at a vertical frequency (60 Hz). For other frequencies (50 Hz and 90 Hz), the liquid crystal temperature ranges covered by the gray scale conversion tables A to H are shifted. This is because, generally, a scale of a change in the liquid crystal temperature has more influence on the overshoot drive than a scale of a change in the vertical frequency. However, in a case where the scale of the change in the vertical frequency has more influence on the overshoot drive than the scale of the change in the liquid crystal temperature, the gray scale conversion tables may be configured for respective predetermined vertical frequency ranges at a liquid crystal temperature. Further, in such a case, the vertical frequency ranges covered by the gray scale conversion tables can be shifted for other liquid crystal temperatures.

As described above, the liquid crystal controller 20 of the present invention is a device that performs the overshoot drive by subjecting the input gray scale data to gray scale conversion with reference to the gray scale conversion table 21b. The selection condition in the selecting section 22a for selecting a gray scale conversion table 21b to be referred to is set such that, as the vertical frequency of the liquid crystal display becomes higher and the liquid crystal temperature becomes lower, the gray scale conversion table of a higher gray scale changing degree is selected. In addition, in regard to at least one of a plurality of gray scale conversion tables A to H, the selection condition is set such that, as the vertical frequency becomes higher, the liquid crystal temperature range in which the at least one gray scale conversion table is to be selected becomes wider.

In a conventional overshoot drive, the liquid crystal temperature ranges in each of which the gray scale conversion table is to be selected have a constant width, regardless of the vertical frequency. In other words, the liquid crystal temperature range covered by each of the gray scale conversion tables has the same width in both cases of vertical frequencies F1 and F2, although the range covered in the case of a vertical frequency F1 is shifted from the range covered in the case of another vertical frequency F2.

However, as a result of an extensive study conducted by the inventors of the present application, it is found that the above configuration cannot always implement gray scale conversion suitable for the overshoot drive.

Based on a result of extensive study conducted by the inventors of the present invention, in the liquid crystal controller 20 of the present invention, in regard to the gray scale conversion tables A to H, it is set that, as the vertical frequency becomes higher, the liquid crystal temperature range in which the gray scale conversion table is to be selected becomes wider. That is, the liquid crystal temperature range covered by a gray scale conversion table is set so as to become wider in the case of a vertical frequency F2, as compared to the case of another vertical frequency F1 (F1<F2).

This makes it possible to implement gray scale conversion that is more suitable for the overshoot drive, as compared to the conventional methods. As a result, a display quality can be further improved.

As described above, in the liquid crystal driving device of the present invention, the selection condition in the selecting section is set such that, as the vertical frequency of the liquid crystal display becomes higher and the liquid crystal temperature becomes lower, the gray scale conversion table of a higher gray scale changing degree is selected. Further, in regard to at least one of a plurality of gray scale conversion tables, the selection condition is set such that, as the vertical frequency becomes higher, the liquid crystal temperature range in which the at least one gray scale conversion table is to be selected becomes wider.

Further, in the liquid crystal driving method according to the present invention, the selection condition in a selecting process is set such that, as the vertical frequency of the liquid crystal display becomes higher and the liquid crystal temperature becomes lower, the gray scale conversion table of a higher gray scale changing degree is selected. Further, in regard to at least one of a plurality of gray scale conversion tables, the selection condition is set such that, as the vertical frequency becomes higher, the liquid crystal temperature range in which the at least one gray scale conversion table is to be selected becomes wider.

This makes it possible to implement gray scale conversion more suitable for the overshoot drive, as compared to the conventional methods. As a result, the display quality can be further improved. This effect is suitably provided especially in the case where a range of the vertical frequencies applied is wide and a range of liquid crystal temperatures at which a proper operation should be guaranteed is wide.

The embodiments discussed in the foregoing Description of Embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is applicable to a liquid crystal display device. Especially, the present invention is suitable for a liquid crystal display device to which a wide range of vertical frequencies are to be applied or a liquid crystal display whose proper operation should be guaranteed in a wide range of liquid crystal temperatures.

## Claims

1. A liquid crystal driving device for performing an overshoot drive by subjecting input gray scale data to gray scale conversion with reference to a gray scale conversion table, the liquid crystal driving device comprising:
a storage section for storing a plurality of gray scale conversion tables each having a different gray scale changing degree in the gray scale conversion;
a selecting section for selecting, from the plurality of gray scale conversion tables, the gray scale conversion table to be referred to; and
a conversion section for converting the input gray scale data with reference to the gray scale conversion table selected,
the selecting section employing a selection condition, the selection condition being set such that: (i) as a vertical frequency of a liquid crystal display becomes higher and a liquid crystal temperature becomes lower, the gray scale conversion table of a higher gray scale changing degree is selected; and (ii) in regard to at least one of the plurality of gray scale conversion tables, as the vertical frequency becomes higher, a liquid crystal temperature range in which the at least one of the plurality of gray scale conversion tables is to be selected becomes wider.

2. The liquid crystal driving device according to claim 1, wherein:
the storage section further stores a border value table specifying border values of the liquid crystal temperatures in accordance with the vertical frequency, the border values being used when the gray scale conversion table is selected; and
the selecting section is given an input of a frequency signal indicative of a vertical frequency and a temperature signal indicative of a liquid crystal temperature so that the selecting section reads out the border values corresponding to the vertical frequency specified by the frequency signal and then selects the gray scale conversion table based on the border values and the liquid crystal temperature specified by the temperature signal.

3. The liquid crystal driving device according to claim 1, wherein:
the selecting section and the conversion section are made up of a CPU; and
the storage section is made up of an external memory provided outside the CPU.

4. The liquid crystal driving device according to claim 1, wherein the plurality of gray scale conversion tables are configured to associate output gray scale data to be outputted to a liquid crystal display panel in a current vertical display period with a combination of the input gray scale data of the current vertical display period and the input gray scale data of a previous vertical display period one cycle before the current vertical display period.

5. The liquid crystal driving device according to claim 1, wherein the plurality of gray scale conversion tables are configured to associate predicted value data of gray scale levels each being predicted to have been reached in a previous display period with a combination of the input gray scale data of a current vertical display period and the input gray scale data of the previous vertical display period one cycle before the current vertical display period.

6. The liquid crystal driving device according to claim 1, wherein the plurality of gray scale conversion tables are configured to associate output gray scale data to be outputted to a liquid crystal display panel in a current vertical display period with a combination of the input gray scale data of the current vertical display period and predicted value data of gray scale levels each being predicted to have been reached in a previous display period one cycle before the current vertical display period.

7. A liquid crystal displaying device comprising:
a liquid crystal driving device as set forth in any one of claims 1 to 6;
a liquid crystal display panel being driven by the liquid crystal driving device; and
a temperature detecting section for detecting a liquid crystal temperature of the liquid crystal display panel.

8. A liquid crystal driving method for performing an overshoot drive by subjecting input gray scale data to gray scale conversion with reference to a gray scale conversion table, the method comprising the steps of:
selecting a gray scale conversion table to be referred to, from a plurality of gray scale conversion tables each having a different gray scale changing degree in the gray scale conversion; and
converting the input gray scale data with reference to the gray scale conversion table selected,
the step of selecting employing a selection condition, the selection condition being set such that: (i) as a vertical frequency of a liquid crystal display becomes higher and the liquid crystal temperature becomes lower, the gray scale conversion table of a higher gray scale changing degree is selected; and (ii) in regard to at least one of the plurality of gray scale conversion tables, as the vertical frequency becomes higher, a liquid crystal temperature range in which the at least one gray scale conversion table is to be selected becomes wider.
